(19) Europäisches Patentamt
European Patent Office
Office européen des brevets

(11) **EP 4 775 941 A1**

(12) **EUROPEAN PATENT APPLICATION**

(43) Date of publication:
**15.07.2026 Bulletin 2026/29**

(21) Application number: **25222470.4**

(22) Date of filing: **11.12.2025**

(51) International Patent Classification (IPC):
**G01J 9/00** (2006.01)     **G02B 26/06** (2006.01)
**H04B 10/118** (2013.01)

(52) Cooperative Patent Classification (CPC):
**G01J 9/00; G02B 26/06; H04B 10/118;**
G01J 2009/002

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **10.01.2025 JP 2025004044**

(71) Applicant: **SCREEN Holdings Co., Ltd.
Kyoto-shi, Kyoto 602-8585 (JP)**

(72) Inventor: **ASHIDA, Yuki
Kyoto 602-8585 (JP)**

(74) Representative: **Goddar, Heinz J.
Boehmert & Boehmert
Anwaltspartnerschaft mbB
Pettenkoferstrasse 22
80336 München (DE)**

(54) **LIGHT WAVEFRONT MEASUREMENT DEVICE AND LIGHT WAVEFRONT CORRECTION DEVICE**

(57)     A light wavefront measurement device includes a lens array, a light receiving sensor, and a wavefront shape calculation part. The lens array focuses measurement light for each region of the wavefront of the measurement light. The light receiving sensor receives multiple light spots focused by the lens array to output an electrical signal for pixels where the amount of received light has changed. The electrical signal indicates the direction of increase or decrease in the amount of received light and the time at which the amount of received light has changed. The wavefront shape calculation part calculates the wavefront shape of the measurement light, based on the electrical signal outputted from the light receiving sensor. The amount of information outputted from the light receiving sensor is smaller than that outputted for all pixels. The light receiving sensor is hence capable of outputting information about the displacement of the light spots with high time resolution. This allows the measurement of the wavefront shape of the measurement light with high time resolution, based on the information outputted from the light receiving sensor.

FIG.6

**Description**

**BACKGROUND OF THE INVENTION**

**Field of the Invention**

The present disclosure relates to a technique for measuring the wavefront of light passed through the atmosphere.

**Description of the Background Art**

Satellite communication technology, which performs communications of information via radio waves between artificial satellites and ground stations, has heretofore been known. However, the radio waves have a limited usable frequency band, which causes a limit to the amount of information being communicated. In recent years, "optical satellite communication" which uses light in place of radio waves to perform communications between artificial satellites and ground stations has been expected.

Unfortunately, light emitted from artificial satellites passes through the atmosphere covering the surface of the earth to reach ground stations. For this reason, the optical satellite communication has a problem in that the wavefront of the light is distorted depending on the conditions of the atmosphere. There is another problem in that wavefront aberrations of the light caused by optical systems affect the transmission of information in some cases. This necessitates a wavefront compensation technique which measures the wavefront shape of light to correct the distorted wavefront to a flat state.

A Shack-Hartmann wavefront sensor has been known as a light wavefront sensor for measuring the wavefront shape of light. The Shack-Hartmann wavefront sensor detects the wavefront shape of light, based on the positions of multiple light spots detected by an optical sensor as a result of the convergence of measurement light using multiple microlenses. Such a conventional light wavefront sensor is disclosed, for example, in Japanese Patent Application Laid-Open No. 2009-162614.

For wavefront compensation in the optical satellite communication, it is sometimes required that the light wavefront sensor captures the measurement light with a high time resolution of 10 kHz or higher, for example.

However, the use of a high-speed camera with a high frame rate results in extremely high costs for the light wavefront sensor, and increases data processing costs in a computational part which processes signals acquired by the high-speed camera. The use of the high-speed camera also presents a problem in that the light wavefront sensor is increased in size.

**SUMMARY OF THE INVENTION**

It is therefore an object of the present disclosure to provide a technique capable of measuring the wavefront shape of light with high time resolution while suppressing costs.

The present disclosure is intended for a light wavefront measurement device for measuring the wavefront of measurement light passed through the atmosphere, which comprises: a lens array for focusing the measurement light for each region of the wavefront; a light receiving sensor for receiving multiple light spots focused by the lens array to output an electrical signal for a pixel where the amount of received light has changed, the electrical signal being indicative of the direction of increase or decrease in the amount of received light and the time at which the amount of received light has changed; and a wavefront shape calculation part for calculating the wavefront shape of the measurement light, based on the electrical signal outputted from the light receiving sensor.

According to the present disclosure, the amount of information outputted is reduced, as compared with the amount of information outputted for all pixels of the light receiving sensor. The light receiving sensor is hence capable of outputting information about the displacement of the light spots with high time resolution. This allows the measurement of the wavefront shape of the measurement light with high time resolution, based on the information outputted from the light receiving sensor.

The light wavefront measurement device may be used for correcting the wavefront shape of communication light transmitted and received for communication between an artificial satellite and a ground station, wherein the measurement light is the communication light.

Thus, the wavefront shape of the communication light itself is measured with high time resolution.

The light wavefront measurement device may be used for correcting the wavefront shape of communication light transmitted and received for communication between an artificial satellite and a ground station, wherein the measurement light is guide light different in wavelength from the communication light.

Thus, the wavefront shape of the communication light is estimated by measuring the wavefront shape of the guide light different in wavelength from the communication light, even if the light receiving sensor cannot receive the wavelength of the communication light itself.

The measurement light may be light from a guide star created by exciting sodium atoms present in an upper layer of the atmosphere with laser light.

A light wavefront correction device for correcting the wavefront shape of communication light transmitted and received for communication between an artificial satellite and a ground station may comprise: the aforementioned light wavefront measurement device; a two-dimensional optical phase modulator for correcting the wavefront shape of the communication light; a correction value calculation part for calculating a correction value for flattening the wavefront, based on the wavefront shape calculated by the wavefront shape calculation part; and a controller for controlling the two-dimensional optical phase modulator, based on the correction value calculated by the correction value calculation part.

Thus, the wavefront shape of the communication light is corrected with high time resolution by controlling the two-dimensional optical phase modulator, based on the wavefront shape measured with high time resolution.

The two-dimensional optical phase modulator may include multiple mirrors drivable for each region of the wavefront; the wavefront shape calculation part may calculate a polynomial representing the wavefront shape by performing fitting, based on the displacement of the multiple light spots measured by the light receiving sensor; and the correction value calculation part may calculate the correction value for driving each of the mirrors of the two-dimensional optical phase modulator, based on the polynomial.

Thus, even if the number of regions into which the wavefront is divided by the lens array differs from the number of regions into which the wavefront is divided by the mirrors of the two-dimensional optical phase modulator, the wavefront of the communication light is appropriately corrected for each region by once approximating the wavefront shape with the polynomial.

The light wavefront correction device may further comprise a beam splitter for splitting the communication light into two light beams at a position downstream of the two-dimensional optical phase modulator in an optical path, wherein one of the two light beams split by the beam splitter enters the lens array, and wherein the other of the two light beams split by the beam splitter enters an optical fiber so as to read information.

Thus, the wavefront shape of the communication light is measured downstream of the two-dimensional optical phase modulator in the optical path. This allows the measurement of the wavefront shape of the communication light at a position closer to the optical fiber.

These and other objects, features, aspects and advantages of the present invention will become more apparent from the following detailed description of the present invention when taken in conjunction with the accompanying drawings.

## BRIEF DESCRIPTION OF THE DRAWINGS

Fig. 1 is a diagram showing a configuration of an optical satellite communication system;
Fig. 2 is a schematic view of a two-dimensional optical phase modulator;
Fig. 3 is a schematic view of a light wavefront sensor;
Fig. 4 is a block diagram conceptually showing functions implemented by a computer;
Fig. 5 is a flow diagram showing a procedure of processes executed by a wavefront shape calculation part, a correction value calculation part, and a controller; and
Fig. 6 is a diagram showing a configuration of the optical satellite communication system according to a modification.

## DESCRIPTION OF THE PREFERRED EMBODIMENTS

A preferred embodiment according to the present disclosure will now be described with reference to the drawings.

### <1. Optical Satellite Communication System>

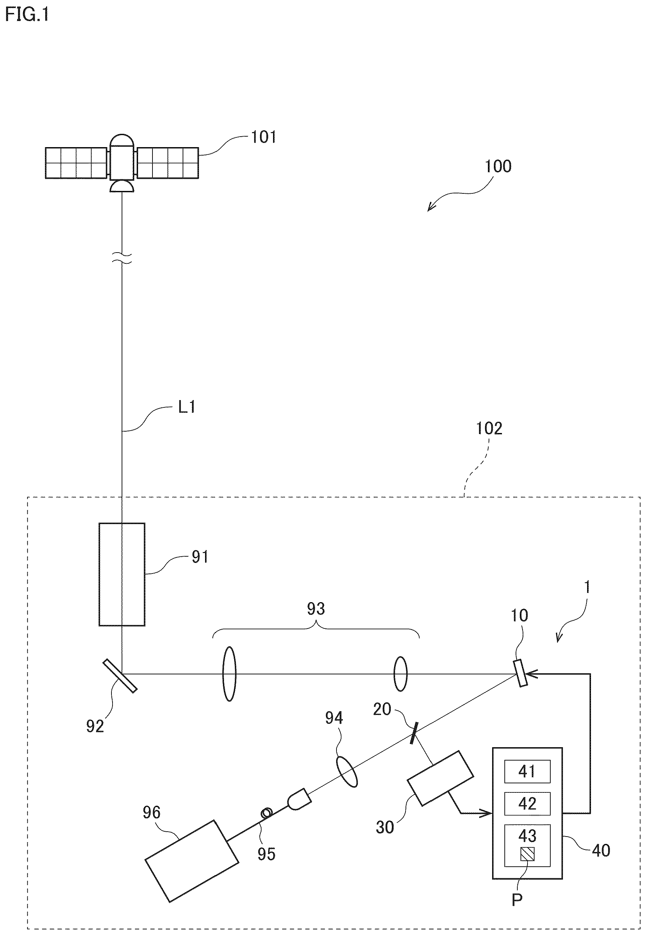

Fig. 1 is a diagram showing a configuration of an optical satellite communication system 100 including a light wavefront correction device 1 according to one preferred embodiment. The optical satellite communication system 100 is a system for performing communications of information via light between an artificial satellite 101 and a ground station 102. The ground station 102 is located on the surface of the earth. The artificial satellite 101 is located in outer space outside the earth's atmosphere which covers the surface of the earth. Light transmitted and received for communications between the artificial satellite 101 and the ground station 102 is referred to hereinafter as "communication light L1".

The artificial satellite 101 emits the communication light L1 toward the ground station 102. The communication light L1 is an infrared light beam having a beam diameter of, for example, approximately 0.5 meters or not less than 1 meter.

The communication light L1 transmits information by modulating the intensity, frequency, or phase thereof. The communication light L1 can be modulated at a higher speed than radio waves. Thus, a greater amount of information is transmitted and received using the communication light L1 than using radio waves.

As shown in Fig. 1, the ground station 102 includes a telescope 91, a reflecting mirror 92, a reduction optical system 93, the light wavefront correction device 1, an aspherical lens 94, an optical fiber 95, and an information reading part 96.

The communication light L1 emitted from the artificial satellite 101 passes through the atmosphere covering the surface of the earth, and enters the telescope 91. The communication light L1 passed through the telescope 91 is reflected from the reflecting mirror 92, passes through the reduction optical system 93 including multiple lenses, and enters the light wavefront correction device 1. The beam diameter of the communication light L1 is reduced to approximately 5 to 10 millimeters by passing through the telescope 91 and the reduction optical system 93.

The wavefront of the communication light L1 is distorted depending on the conditions of the atmosphere because the communication light L1 passes through the atmosphere. The light wavefront correction device 1 is a device which measures the wavefront shape of the communication light L1 which includes the distortion to automatically correct the wavefront shape of the communication light L1, based on the measurement results. The communication light L1 with its wavefront corrected by the light wavefront correction device 1 is focused by the aspherical lens 94, and enters the optical fiber 95. Then, the information reading part 96 reads information from the communication light L1 transmitted by the optical fiber 95.

## <2. Light Wavefront Correction Device>

Next, the detailed configuration of the light wavefront correction device 1 will be described. As shown in Fig. 1, the light wavefront correction device 1 includes a two-dimensional optical phase modulator 10, a beam splitter 20, a light wavefront sensor 30, and a computer 40.

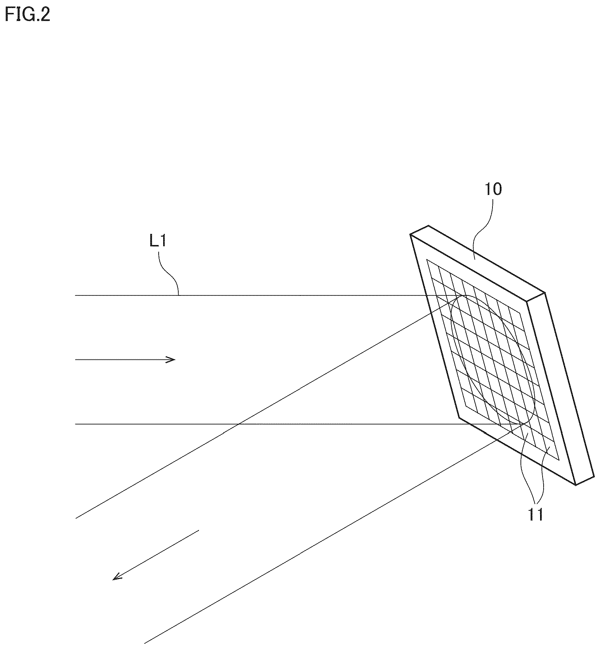

The two-dimensional optical phase modulator 10 is an optical device for correcting the wavefront shape of the communication light L1. Fig. 2 is a schematic view of the two-dimensional optical phase modulator 10. For example, a PLV (Planar Light Valve) is used as the two-dimensional optical phase modulator 10. The PLV is a MEMS (Micro Electro Mechanical System) having multiple micromirrors 11 arranged in a lattice pattern. The communication light L1 is reflected from the surfaces of the multiple micromirrors 11.

The micromirrors 11 are one example of "mirrors". The size of a single micromirror 11 is sufficiently smaller than the beam diameter of the communication light L1 incident upon the two-dimensional optical phase modulator 10. The micromirrors 11 have, for example, a rectangular shape as shown in Fig. 2. The number of micromirrors 11 in the two-dimensional optical phase modulator 10 is, for example, $128 \times 128$, but is not limited to this. The multiple micromirrors 11 correspond to respective regions into which the wavefront of the communication light L1 is divided.

The two-dimensional optical phase modulator 10 individually drives the multiple micromirrors 11, based on electrical signals inputted from the computer 40, to minutely vary the heights of the respective micromirrors 11. The height of each of the micromirrors 11 is variable in multiple steps (e.g., four steps), for example, by approximately several nanometers per step. This modulates the phase of the communication light L1 in each of the regions. As a result, the wavefront shape of the communication light L1 reflected from the two-dimensional optical phase modulator 10 is corrected in each of the regions.

The beam splitter 20 is positioned downstream of the two-dimensional optical phase modulator 10 in the optical path. The beam splitter 20 splits the communication light L1 reflected from the two-dimensional optical phase modulator 10 into two light beams. The two light beams of the communication light L1 split by the beam splitter 20 have the same wavefront. One of the light beams of the communication light L1 enters the light wavefront sensor 30. The other light beam of the communication light L1 passes through the aspherical lens 94 and enters the optical fiber 95.

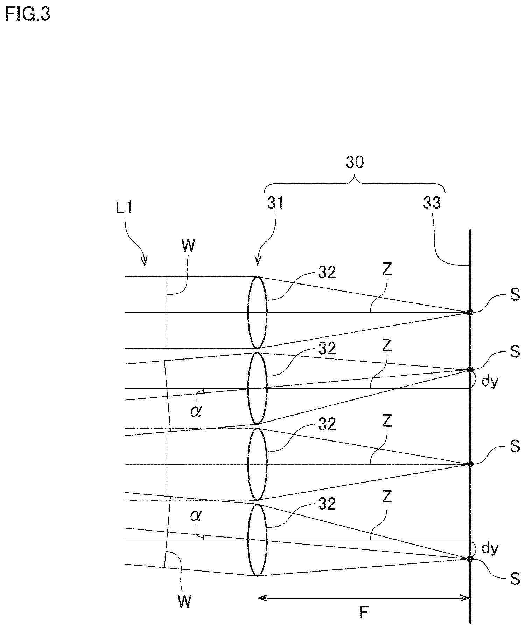

The light wavefront sensor 30 is a sensor for measuring the wavefront shape of the communication light L1. In the present preferred embodiment, the communication light L1 itself is used as measurement light. For example, a Shack-Hartmann wavefront sensor is used as the light wavefront sensor 30. Fig. 3 is a schematic view of the light wavefront sensor 30. As shown in Fig. 3, the light wavefront sensor 30 includes a lens array 31 and a light receiving sensor 33.

The lens array 31 is disposed perpendicularly to the optical axis of the communication light L1. The lens array 31 includes multiple microlenses 32 arranged in a lattice pattern. The size of the microlenses 32 is, for example, approximately 50 to 500 microns. It is desirable that the number of microlenses 32 in the lens array 31 is not less than $2 \times 2$. The multiple microlenses 32 correspond to respective regions into which the wavefront W of the communication light L1 is divided.

The lens array 31 focuses the communication light L1 for each of the regions of the wavefront W. This causes the same number of light spots S as the microlenses 32 to enter the light receiving sensor 33. When the wavefront W of the communication light L1 is a plane perpendicular to the optical axis thereof, the multiple light spots S are image-formed on the respective central axes Z of the microlenses 32. However, when the wavefront W of the communication light L1 is distorted, the light spots S are image-formed on positions displaced from the respective central axes Z of the microlenses 32.

The light receiving sensor 33 is a two-dimensional image sensor which captures the multiple light spots S. For example, an event-based camera is used as the light receiving sensor 33. Unlike frame-based cameras for typical video recording, the event-based camera is a camera which captures only changes in brightness. A frame-based camera outputs video data comprised of a time-series sequence of frame images each having information about brightness values of a large number of pixels. On the other hand, the event-based camera outputs information about only pixels with changed brightness values.

The light receiving sensor 33 receives the multiple light spots S, and outputs an electrical signal only for pixels where changes in the amount of received light exceeds a threshold value to the computer 40. The electrical signal indicates the direction of increase or decrease in the amount of received light and the time at which the amount of received light has changed. The light receiving sensor 33 does not output the electrical signal for pixels where the amount of received light is not changed. For this reason, the amount of information of the electrical signal outputted from the light receiving sensor 33 is smaller than that of the electrical signal outputted from the frame-based camera.

Thus, the use of the event-based camera as the light receiving sensor 33 enables faster detection of changes in brightness and faster output of the electrical signals than the use of the frame-based camera. Specifically, while a typical frame-based camera has a frame rate of not greater than 100 fps, the event-based camera is capable of outputting the aforementioned electrical signals with a time resolution exceeding 10 kHz.

The modulation of the intensity, frequency, or phase for representing the communication information of the communication light L1 has a frequency of not less than 1 GHz which is finer than the time resolution of the light receiving sensor 33 that is the event-based camera. For this reason, the modulation of the communication light L1 for representing the communication information is not an object to be detected by the light receiving sensor 33.

Referring again to Fig. 1, the computer 40 is a unit for controlling the two-dimensional optical phase modulator 10, based on the electrical signals outputted from the light receiving sensor 33. The computer 40 includes a processor 41 such as a CPU (Central Processing Unit), a memory 42 such as a RAM (Random Access Memory), and a storage part 43 such as a hard disk drive. A computer program P is stored in the storage part 43.

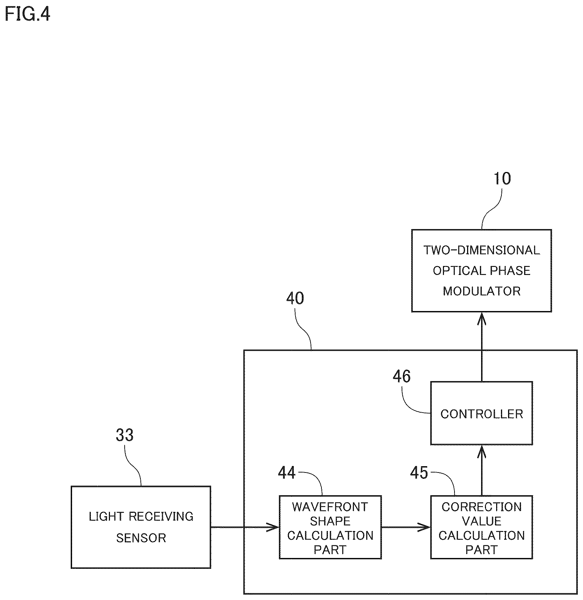

Fig. 4 is a block diagram conceptually showing functions implemented by the computer 40. As shown in Fig. 4, the computer 40 includes a wavefront shape calculation part 44, a correction value calculation part 45, and a controller 46. The functions of the wavefront shape calculation part 44, the correction value calculation part 45, and the controller 46 are implemented by the processor 41 operating in accordance with the computer program P.

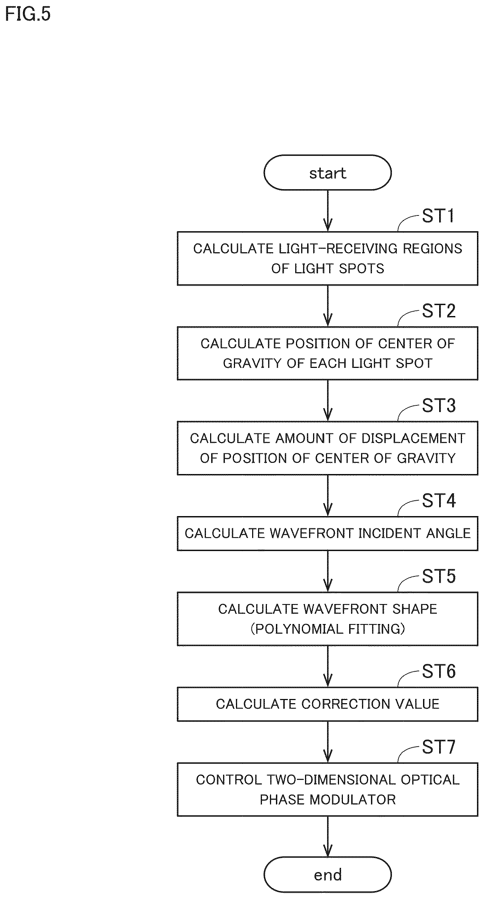

Fig. 5 is a flow diagram showing a procedure of processes executed by the wavefront shape calculation part 44, the correction value calculation part 45, and the controller 46. The functions of the wavefront shape calculation part 44, the correction value calculation part 45, and the controller 46 will be described below with reference to Figs. 4 and 5.

The wavefront shape calculation part 44 is a processing part for calculating the wavefront shape of the communication light L1, based on the electrical signals outputted from the light receiving sensor 33. The lens array 31, the light receiving sensor 33, and the wavefront shape calculation part 44 constitute a "light wavefront measurement device" for measuring the wavefront shape of the communication light L1 which is the measurement light.

The wavefront shape calculation part 44 initially calculates the light-receiving regions of the light spots S, based on the detection results from the light receiving sensor 33 (Step ST1). The light receiving sensor 33 outputs information for only pixels where the amount of received light has changed. For this reason, the wavefront shape calculation part 44 changes the light-receiving regions of the light spots S for the pixels where the amount of received light has changed, and does not change the light-receiving regions of the light spots S for other pixels. The wavefront shape calculation part 44 performs such updating of the light-receiving regions each time the electrical signal is inputted from the light receiving sensor 33. This successively identifies the light-receiving regions of the light spots S.

Next, the wavefront shape calculation part 44 calculates the position of the center of gravity of each of the multiple light spots S (Step ST2). The position of the center of gravity of each light spot S is, for example, the center position of the light-receiving region of each light spot S. Then, the wavefront shape calculation part 44 calculates the amount of displacement dy of the position of the center of gravity of each of the multiple light spots S (Step ST3). Specifically, the wavefront shape calculation part 44 calculates, for each light spot S, how much the position of the center of gravity calculated in Step ST2 is displaced in a direction perpendicular to the central axis Z from the position where the position of the center of gravity overlaps the central axis Z of the microlens 32.

As shown in Fig. 3, the amount of displacement dy of the position of the center of gravity calculated in Step ST3 reflects the inclination of each region of the wavefront W of the communication light L1. Specifically, when the wavefront W is perpendicular to the central axis Z of the microlens 32, the amount of displacement dy of the position of the center of gravity is zero. As the inclination of the wavefront W with respect to the central axis Z increases, the amount of displacement dy of the position of the center of gravity also increases. The direction in which the position of the center of gravity of each light spot S is displaced from the central axis Z of the microlens 32 reflects the direction of the inclination of the wavefront W.

The wavefront shape calculation part 44 calculates a wavefront incident angle α shown in Fig. 3 for each light spot S, based on the amount of displacement dy of the position of the center of gravity calculated in Step ST3 (Step ST4). The wavefront incident angle α is geometrically calculated, for example, by:

$$\alpha = \tan^{-1}(\delta y/F) \tag{1}$$

where F is the distance from the microlens 32 to the light receiving sensor 33 along the optical axis.

The wavefront shape calculation part 44 calculates the overall wavefront shape of the communication light L1, based on the amount of displacement dy or the wavefront incident angle α for each light spot S (Step ST5). In this example, the wavefront shape calculation part 44 calculates a polynomial representing the shape of the wavefront W by performing fitting using a polynomial, based on the distribution of the amount of displacement dy or the wavefront incident angle α of the light spots S. This expresses the continuous wavefront shape throughout the communication light L1. This polynomial fitting is well performed, for example, using Zernike polynomials.

The correction value calculation part 45 is a processing part for calculating a correction value for flattening the wavefront W, based on the wavefront shape calculated by the wavefront shape calculation part 44. The correction value calculation part 45 calculates the correction value for each of the regions of the micromirrors 11 of the two-dimensional optical phase modulator 10, based on the polynomial calculated in Step ST5 (Step ST6).

The correction value calculation part 45 calculates the correction value so as to inversely correct the distortion of the wavefront W measured by the light wavefront sensor 30. For example, in the regions where the phase of light is lagging, the correction value calculation part 45 calculates the correction value for driving the micromirrors 11 so as to advance the phase. In the regions where the phase of light is leading, the correction value calculation part 45 calculates the correction value for driving the micromirrors 11 so as to delay the phase.

The controller 46 is a processing part for controlling the driving of the two-dimensional optical phase modulator 10. The controller 46 drives each of the micromirrors 11 of the two-dimensional optical phase modulator 10, based on the correction value calculated by the correction value calculation part 45 (Step ST7). This corrects the phase of the communication light L1 reflected from the two-dimensional optical phase modulator 10 for each region. As a result, the wavefront W of the communication light L1 is flattened.

As described above, the light wavefront correction device 1 employs an event-based camera as the light receiving sensor 33 for the light wavefront sensor 30. The event-based camera does not output information for pixels where the amount of received light is not changed. Thus, the light receiving sensor 33 is capable of outputting information about the displacement of the light spots S with high time resolution. This allows the measurement of the wavefront shape of the communication light L1 with high time resolution, based on the information outputted from the light receiving sensor 33. Controlling the two-dimensional optical phase modulator 10 based on the measured wavefront shape allows the correction of the wavefront shape of the communication light L1 with high time resolution. That is, the use of the light wavefront correction device 1 achieves high-speed wavefront compensation required for optical communication.

The use of the event-based camera achieves the measurement with high time resolution without the use of costly large-sized high-speed cameras. This significantly reduces the costs of the light wavefront correction device 1, as compared with the use of high-speed cameras. and also significantly reduces the size of the light wavefront correction device 1.

In particular, the present preferred embodiment uses the communication light L1 itself emitted from the artificial satellite 101 as the measurement light for the light wavefront sensor 30. This allows the measurement of the wavefront shape of the communication light L1 itself with high time resolution, and the correction of the wavefront of the communication light L1 with accuracy.

In Step ST5 in the present preferred embodiment, the wavefront shape calculation part 44 calculates a polynomial representing the shape of the wavefront, based on the displacement of the multiple light spots S. Thus, even if the number of regions into which the wavefront is divided by the lens array 31 of the light wavefront sensor 30 differs from the number of regions into which the wavefront is divided by the micromirrors 11 of the two-dimensional optical phase modulator 10, the wavefront of the communication light L1 is appropriately corrected for each region, based on the wavefront shape continuously represented by the polynomial.

Further, in the present preferred embodiment, the wavefront shape of the communication light L1 is measured downstream of the two-dimensional optical phase modulator 10 in the optical path. This allows the measurement of the wavefront shape of the communication light L1 at a position closer to the optical fiber 95, as compared with the measurement of the wavefront shape of the communication light L1 at a position upstream of the two-dimensional optical phase modulator 10 in the optical path.

### <3. Modifications>

While the one preferred embodiment has been described hereinabove, the present disclosure is not limited to the aforementioned preferred embodiment. Various modifications will be described below mainly regarding differences from the aforementioned preferred embodiment.

### <3-1. First Modification>

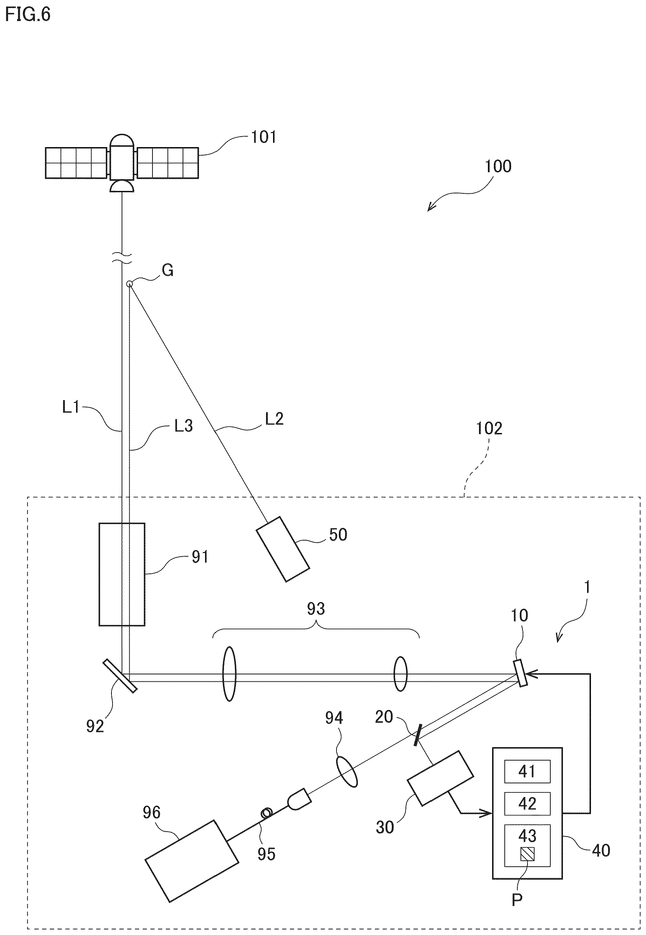

Fig. 6 is a diagram showing a configuration of the optical satellite communication system 100 including the light wavefront correction device 1 according to a first modification. The modification of Fig. 6 assumes a case in which the light receiving sensor 33 cannot receive the wavelength of the communication light L1 itself. For example, the modification of Fig. 6 assumes a case in which the communication light L1 is infrared light and an event-based camera serving as the light receiving sensor 33 employs a silicon sensor which cannot receive infrared light.

In the modification of Fig. 6, the light wavefront correction device 1 includes a laser light source 50. The laser light source 50 emits laser light L2 toward a sodium layer present in an upper layer of the atmosphere. The wavelength of the laser light L2 is set to a wavelength between 500 and 600 nm which is capable of exciting sodium atoms. When irradiated with the laser light L2, sodium atoms in the sodium layer are excited by the laser light L2 to emit light. This creates a guide star G in the sodium layer. It should be noted that the aforementioned method of creating the guide star G is one example, and the wavelength of the laser light used to create the guide star G is not limited to the aforementioned wavelength.

It is desirable that the guide star G is created on or near the optical path of the communication light L1 emitted from the artificial satellite 101. The guide star G emits guide light L3 at a visible wavelength receivable by the light receiving sensor 33. In this case, the guide light L3 emitted from the guide star G passes through the telescope 91, the reflecting mirror 92, and the reduction optical system 93, and enters the two-dimensional optical phase modulator 10. The guide light L3 reflected from the two-dimensional optical phase modulator 10 then passes through the beam splitter 20, and enters the light wavefront sensor 30. Thus, the wavefront shape calculation part 44 is able to calculate the wavefront shape of the guide light L3, based on the electrical signal outputted from the light wavefront sensor 30.

This allows the measurement of the wavefront shape of the guide light L3 different in wavelength from the communication light L1, even if the light receiving sensor 33 cannot receive the wavelength of the communication light L1 itself. The wavefronts of the communication light L1 and the guide light L3 are considered to be similarly distorted by the atmosphere. For this reason, the computer 40 is able to estimate the wavefront shape of the communication light L1, based on the wavefront shape of the guide light L3. Then, the computer 40 is able to correct the wavefront shape of the communication light L1, based on the estimated wavefront shape.

However, the amount of wavefront distortion is inversely proportional to the wavelength of light. It is hence necessary to convert the amount of wavefront distortion measured using the guide light L3 so as to match the wavelength of the communication light L1 to be corrected. Specifically, the amount of wavefront distortion W1 of the communication light L1 is calculated by the following conversion equation:

$$W1 = W2 \times \lambda1/\lambda2 \qquad (2)$$

where $\lambda1$ is the wavelength of the communication light L1, W1 is the amount of wavefront distortion of the communication light L1, $\lambda2$ is the wavelength of the guide light L3, and W2 is the amount of wavefront distortion of the guide light L3.

### <3-2. Other Modifications>

In the aforementioned preferred embodiment, an event-based camera is taken as an example of the light receiving sensor 33. However, the light receiving sensor 33 is not limited to what is called event-based cameras, but may be other sensors capable of outputting electrical signals indicating the direction of increase or decrease in the amount of received light and the time at which the amount of received light has changed for pixels where the amount of received light has changed, and capable of outputting electrical signals with higher time resolution than frame-based high-speed cameras.

In the aforementioned preferred embodiment, a PLV is taken as an example of the two-dimensional optical phase modulator 10. However, the two-dimensional optical phase modulator 10 may be a device other than the PLV. For example, the two-dimensional optical phase modulator 10 may be a DMD (Digital Mirror Device) or the like. Also, the two-dimensional optical phase modulator 10 may be a device which modulates the phase for each region while transmitting light, rather than reflecting light (e.g., a LCOS (Liquid Crystal On Silicon) device).

The case in which the ground station 102 receives the communication light L1 emitted from the artificial satellite 101 is described in the aforementioned preferred embodiment. For this reason, the light wavefront correction device 1 is provided in the ground station 102 in the aforementioned preferred embodiment. However, the wavefront of the communication light L1 may be measured and corrected using the same method as in the aforementioned preferred embodiment when the artificial satellite 101 receives the communication light L1 emitted from the ground station 102. In that case, the light wavefront correction device 1 may be provided in the artificial satellite 101.

Some of the components appearing in the aforementioned preferred embodiment and modifications may be appropriately combined or partially omitted, as long as no contradictions arise.

While the invention has been shown and described in detail, the foregoing description is in all aspects illustrative and not restrictive. It is therefore understood that numerous modifications and variations can be devised without departing from the scope of the invention.

**Claims**

1.   A light wavefront measurement device for measuring the wavefront of measurement light passed through the atmosphere, comprising:

   a lens array (31) for focusing said measurement light for each region of the wavefront;
   a light receiving sensor (33) for receiving multiple light spots focused by said lens array (31) to output an electrical signal for a pixel where the amount of received light has changed, the electrical signal being indicative of the direction of increase or decrease in the amount of received light and the time at which the amount of received light has changed; and
   a wavefront shape calculation part (44) for calculating the wavefront shape of said measurement light, based on the electrical signal outputted from said light receiving sensor (33).

2.   The light wavefront measurement device according to claim 1,

   said light wavefront measurement device being used for correcting the wavefront shape of communication light transmitted and received for communication between an artificial satellite and a ground station,
   wherein said measurement light is said communication light.

3.   The light wavefront measurement device according to claim 1,

   said light wavefront measurement device being used for correcting the wavefront shape of communication light transmitted and received for communication between an artificial satellite and a ground station,
   wherein said measurement light is guide light different in wavelength from said communication light.

4.   The light wavefront measurement device according to claim 3,
   wherein said measurement light is light from a guide star created by exciting sodium atoms present in an upper layer of the atmosphere with laser light.

5.   A light wavefront correction device (1) for correcting the wavefront shape of communication light transmitted and received for communication between an artificial satellite and a ground station, comprising:

   a light wavefront measurement device as recited in any one of claims 2 to 4;
   a two-dimensional optical phase modulator (10) for correcting the wavefront shape of said communication light;
   a correction value calculation part (45) for calculating a correction value for flattening said wavefront, based on the wavefront shape calculated by said wavefront shape calculation part (44); and
   a controller (46) for controlling said two-dimensional optical phase modulator (10), based on the correction value calculated by said correction value calculation part (45).

6.   The light wavefront correction device (1) according to claim 5,

   wherein said two-dimensional optical phase modulator (10) includes multiple mirrors (11) drivable for each region of the wavefront,
   wherein said wavefront shape calculation part (44) calculates a polynomial representing the wavefront shape by performing fitting, based on the displacement of the multiple light spots measured by said light receiving sensor (33), and
   wherein said correction value calculation part (45) calculates the correction value for driving each of the mirrors (11) of said two-dimensional optical phase modulator (10), based on said polynomial.

7. The light wavefront correction device (1) according to claim 5 or 6, further comprising

a beam splitter (20) for splitting the communication light into two light beams at a position downstream of said two-dimensional optical phase modulator (10) in an optical path,
wherein one of said two light beams split by said beam splitter (20) enters said lens array (31), and
wherein the other of said two light beams split by said beam splitter (20) enters an optical fiber (95) so as to read information.

FIG.1

FIG.2

FIG.3

FIG.4

TWO-DIMENSIONAL
OPTICAL PHASE
MODULATOR

10

40

46

CONTROLLER

33

44

45

LIGHT RECEIVING
SENSOR

WAVEFRONT
SHAPE
CALCULATION
PART

CORRECTION
VALUE
CALCULATION
PART

FIG.5

```
                    ┌─────────────┐
                    │    start    │
                    └──────┬──────┘
                           │         ⌒ST1
                           ▼
            ┌──────────────────────────────────┐
            │  CALCULATE LIGHT-RECEIVING REGIONS │
            │           OF LIGHT SPOTS           │
            └──────────────┬───────────────────┘
                           │         ⌒ST2
                           ▼
            ┌──────────────────────────────────┐
            │  CALCULATE POSITION OF CENTER OF   │
            │     GRAVITY OF EACH LIGHT SPOT     │
            └──────────────┬───────────────────┘
                           │         ⌒ST3
                           ▼
            ┌──────────────────────────────────┐
            │  CALCULATE AMOUNT OF DISPLACEMENT  │
            │  OF POSITION OF CENTER OF GRAVITY  │
            └──────────────┬───────────────────┘
                           │         ⌒ST4
                           ▼
            ┌──────────────────────────────────┐
            │  CALCULATE WAVEFRONT INCIDENT ANGLE│
            └──────────────┬───────────────────┘
                           │         ⌒ST5
                           ▼
            ┌──────────────────────────────────┐
            │      CALCULATE WAVEFRONT SHAPE     │
            │       (POLYNOMIAL FITTING)         │
            └──────────────┬───────────────────┘
                           │         ⌒ST6
                           ▼
            ┌──────────────────────────────────┐
            │      CALCULATE CORRECTION VALUE    │
            └──────────────┬───────────────────┘
                           │         ⌒ST7
                           ▼
            ┌──────────────────────────────────┐
            │  CONTROL TWO-DIMENSIONAL OPTICAL   │
            │         PHASE MODULATOR            │
            └──────────────┬───────────────────┘
                           │
                           ▼
                    ┌─────────────┐
                    │     end     │
                    └─────────────┘
```

FIG.6

Europäisches Patentamt

European Patent Office

Office européen des brevets

# EUROPEAN SEARCH REPORT

**Application Number**

EP 25 22 2470

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KONG FANPENG ET AL: "Shack-Hartmann wavefront sensing using spatial-temporal data from an event-based image sensor", OPTICS EXPRESS, vol. 28, no. 24, 13 November 2020 (2020-11-13), page 36159, XP093398657, US ISSN: 1094-4087, DOI: 10.1364/oe.409682 | 1-3,5 | INV. G01J9/00 G02B26/06 H04B10/118 |
| Y | * figure 9 * <br> * page 2, paragraph 2 - paragraph 3 * <br> * page 11, line 1 - line 2 * <br> ----- | 2-7 | |
| X | GROSE MITCHELL ET AL: "Convolutional neural network for improved event-based Shack-Hartmann wavefront reconstruction", APPLIED OPTICS, vol. 63, no. 16, 19 April 2024 (2024-04-19), page E35, XP093398658, US ISSN: 1559-128X, DOI: 10.1364/ao.520652 | 1-3,5 | |
| Y | * figures 1-5 * <br> * page 1, right-hand column, paragraph 1 - page 2, left-hand column, last paragraph * <br> * page 3, left-hand column, last paragraph - page 6, left-hand column, paragraph 1 * <br> * page 1, left-hand column, paragraph 1 * <br> * page 3, left-hand column, paragraph 1 - paragraph 2 * <br> ----- <br> -/-- | 2-7 | **TECHNICAL FIELDS SEARCHED (IPC)** <br><br> G01J <br> G02B <br> H04B |

The present search report has been drawn up for all claims

| Place of search | Date of completion of the search | Examiner |
|---|---|---|
| Munich | 19 May 2026 | Jacquin, Jérôme |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

..........................................................................................................

& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

Application Number

EP 25 22 2470

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Cockram Monique ET AL: ""To change or not to change": Exploring the potential of event-based detectors for wavefront sensing",<br>,<br>24 January 2024 (2024-01-24), XP093398685,<br>DOI: 10.13009/AO4ELT7-2023-074<br>Retrieved from the Internet:<br>URL:https://hal.science/hal-04414799/document<br>* Chapter "Detector specifications"; page 3 - page 5, last paragraph *<br>----- | 1 | |
| Y | CN 108 732 742 A (INST OPTICS & ELECTRONICS CAS)<br>2 November 2018 (2018-11-02)<br>* figure 1 *<br>----- | 2-6 | |
| Y | US 2024/372616 A1 (LANDAU IGOR [US] ET AL)<br>7 November 2024 (2024-11-07)<br>* figures 2,6,11 *<br>* paragraphs [0047], [0086], [0125] *<br>----- | 5,7 | |

TECHNICAL FIELDS
SEARCHED (IPC)

The present search report has been drawn up for all claims

| Place of search | Date of completion of the search | Examiner |
|---|---|---|
| Munich | 19 May 2026 | Jacquin, Jérôme |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................................................

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 25 22 2470

This annex lists the patent family members relating to the patent documents cited in  the above-mentioned European search report.
The members are as contained in the European Patent Office EDP file on
The European Patent Office is in no way liable for these particulars which are merely given for the purpose of information.

19-05-2026

| Patent document cited in search report | | Publication date | Patent family member(s) | | Publication date |
|---|---|---|---|---|---|
| CN 108732742 | A | 02-11-2018 | NONE | | |
| US 2024372616 | A1 | 07-11-2024 | US | 2024372616 A1 | 07-11-2024 |
| | | | WO | 2025080304 A2 | 17-04-2025 |

EPO FORM P0459

For more details about this annex : see Official Journal of the European Patent Office, No. 12/82

**REFERENCES CITED IN THE DESCRIPTION**

**Patent documents cited in the description**

- JP 2009162614 A